# FASCICULE DE BREVET EUROPEEN

(11) **EP 3 921 199 B1**
(45) Date de publication et mention de la délivrance du brevet: **06.03.2024**
(21) Numéro de dépôt: 20701015.8
(22) Date de dépôt: 16.01.2020
(51) Int. Cl.: B60K 11/04

(54) **AGENCEMENT D'UN COMPARTIMENT MOTEUR D'UN VÉHICULE AUTOMOBILE**
ANORDNUNG EINES MOTORRAUMS EINES KRAFTFAHRZEUGS
ARRANGEMENT OF AN ENGINE COMPARTMENT OF A MOTOR VEHICLE

(30) Priorité: 05.02.2019 FR 1901096
(43) Date de publication de la demande: 15.12.2021
(73) Titulaire: Renault s.a.s, 92100 Boulogne Billancourt (FR)
(72) Inventeur: CAYER, Regis, 92320 CHATILLON (FR); DESAFIT, Christophe, 78370 PLAISIR (FR); MARREL, Sebastien, 28100 DREUX (FR)
(74) Mandataire: Renault Group
(86) Numéro de dépôt international: PCT/EP2020/050972
(87) Numéro de publication internationale: WO 2020/160885

(56) Documents cités:
- EP-A2- 1 972 528
- CN-A- 108 638 841
- US-A1- 2018 340 735

## Description

L'invention est du domaine des véhicules automobiles et plus précisément de l'architecture sous capot moteur de ces véhicules. Il concerne un agencement d'un compartiment moteur avec un dispositif d'interconnexion d'organes d'un circuit de refroidissement. L'invention porte aussi sur un véhicule ayant un tel agencement.

Un véhicule notamment de type d'une automobile comprend un groupe motopropulseur animé par un moteur thermique et/ou électrique qui nécessite un management thermique pour sa régulation en température à des valeurs nominales de fonctionnement. Pour ce faire, les organes à refroidir sont reliés hydrauliquement à des échangeurs thermiques de telle sorte qu'un fluide de refroidissement traversant l'organe à refroidir est apte à venir en échange thermique avec un fluide de refroidissement, notamment de l'air.

Le fonctionnement du moteur de véhicule automobile ne peut être assuré sans la connexion des divers circuits hydrauliques raccordant divers organes du moteur entre eux ainsi qu'à des dispositifs de refroidissement. Lors du montage du véhicule ou de sa maintenance, il est donc impératif d'assurer le passage et la connexion de nombreux corps allongés, notamment de conduites, des câbles ou faisceaux de câbles, dans le compartiment moteur.

Cela ne va pas sans poser de nombreux problèmes aux constructeurs automobiles. Les chemins de divers corps allongés doivent tenir compte non seulement de l'espace disponible dans le compartiment moteur, mais également de la proximité des éléments chauds comme les pièces du moteur ou certaines conduites tubulaires risquant de compromettre le fonctionnement des corps allongés fragiles ou contenant des liquides froids. Ce problème est particulièrement important pour les corps allongés souples dont la position peut varier lorsqu'ils sont soumis à des vibrations. Les constructeurs automobiles ont donc été amenés à concevoir des chemins de corps allongés présentant une bonne sécurité, c'est-à-dire un éloignement suffisant à d'autres pièces environnantes ou directement adjacentes, ce qui contraint à exclure certains positionnements de ces dispositifs d'interconnexion qui optimiseraient pourtant l'espace disponible dans le compartiment moteur.

Il a en outre été relevé un besoin croissant d'échanges thermique entre le fluide de refroidissement et le fluide caloporteur circulant dans le circuit hydraulique qui se traduit par une augmentation du faisceau destiné à cet échange thermique. Une telle augmentation tend à rapprocher les extrémités latérales des échangeurs thermiques d'un cadre support contournant en tout ou partie ces extrémités de sorte que l'espace nécessaire au positionnement sécuritaire des corps allongés souples n'est plus suffisant. Il en demeure que les vibrations issues du fonctionnement du véhicule pourraient générer une usure prématurée des corps allongés souples par mise en contact avec l'un au moins des échangeurs thermiques et/ou du cadre support.

CN 108 638 841 A décrit un agencement selon lequel une conduite est fixée à un support.

Un but de la présente invention est d'offrir une possibilité d'intégration d'un circuit de refroidissement sous capot moteur qui permette d'optimiser l'encombrement sous capot moteur.

Ce but est atteint par l'agencement d'un compartiment moteur d'un véhicule automobile selon l'invention.

L'invention a ainsi trait à un agencement d'un compartiment moteur d'un véhicule automobile comportant un cadre support, au moins un échangeur et un circuit de refroidissement, le cadre support étant au moins en partie disposé autour de l'échangeur thermique.

L'agencement comprend un dispositif d'interconnexion reliant au moins un échangeur thermique au circuit de refroidissement est disposé pour partie au travers d'un passage délimité par l'échangeur thermique et le cadre support.

Le dispositif d'interconnexion est fixé sur une boîte à eau d'un échangeur thermique, notamment par vissage d'une platine d'interfaçage qui est montée solidaire de la tubulure rigide, ce qui permet de rendre solidaire le circuit de refroidissement de l'échangeur thermique et éviter ainsi des vibrations susceptibles d'engendrer des fuites du circuit de refroidissement ;

L'agencement objet de l'invention peut aussi comprendre les caractéristiques suivantes prises séparément ou en combinaison entre elles :
- le dispositif d'interconnexion comprend au moins une tubulure rigide dont une portion est placée entre un bord latéral de l'échangeur thermique et une portion du cadre support, ce qui permet d'optimiser la conception du circuit de refroidissement notamment en réduisant la longueur des éléments d'écoulement du fluide de refroidissement, gage de réduction de coût et d'optimisation thermique ;
- le dispositif d'interconnexion comprend un moyen de blocage à rotation qui se compose d'au moins une butée en saillie hors d'une partie sommitale de la platine d'interfaçage, la butée étant positionnée dans un logement de l'échangeur thermique, ce qui permet d'annuler toute contrainte mécanique appliquée par les tubulures du circuit de refroidissement sur les brides d'entrée ou de sortie de fluide présentes sur tout échangeur thermique ;
- chaque butée est réalisée par pliage de la platine d'interfaçage, ce qui en facilite la réalisation à moindre coût ;
- le logement est délimité par des nervures entrecroisées de rigidification réalisées sur une boîte à eau de l'échangeur thermique, ce qui permet une double fonction de rigidification de la boite à eau de l'échangeur thermique et de maintien en position du circuit de refroidissement par l'intermédiaire du dispositif d'interconnexion ;
- la tubulure rigide comprend au moins une bride d'assemblage disposée à l'une des extrémités de la tubulure rigide pour sa connexion à l'échangeur thermique ou au circuit de refroidissement ;
- chaque bride d'assemblage a un profil sensiblement tronconique et comprend au moins une rainure de retenue, notamment deux rainures de retenue coaxiales et parallèles, la bride étant reliée par emmanchement à une tubulure souple d'un circuit de refroidissement ou d'un module de liaison ou directement à un module de liaison ;
- le module de liaison est notamment de type à encliquetage, afin de rendre apte la connexion rapide d'au moins une tubulure souple ou rigide à un échangeur thermique, ce qui permet de réduire le temps de montage de l'échangeur de chaleur ;
- une conduite du circuit de refroidissement ou d'une tubulure souple du dispositif d'interconnexion ou un module de liaison est solidairement fixée à la bride d'assemblage de la tubulure rigide par un collier de serrage, ce qui améliore la tenue de la liaison ;
- la tubulure souple présente une section supérieure à celle de la tubulure rigide de sorte que la tubulure rigide peut être positionnée dans un espace réduit entre le cadre support et l'échangeur thermique, ce qui permet éviter tout risque de fuite résultant d'une détérioration du circuit de refroidissement du fait des vibrations issues du fonctionnement du véhicule ;
- le dispositif d'interconnexion comporte deux tubulures rigides parallèles au moins en partie l'une par rapport à l'autre, et reliées entre elles par la platine d'interfaçage, ce qui accroit la tenue mécanique du dispositif d'interconnexion ;
- le dispositif d'interconnexion comprend une douille destinée au montage d'un équipement, notamment un capteur de température, ce qui évite la création d'un moyen spécifique d'assemblage d'un capteur sur le circuit de refroidissement ;
- une extrémité avant d'une tubulure rigide est recourbée de manière approximativement perpendiculaire à l'extrémité arrière de la même tubulure rigide, ce qui permet d'assujettir le dispositif d'interconnexion à la conformation même de l'échangeur de chaleur notamment à la localisation de ses brides d'entrée ou sortie de fluide ;
- l'extrémité avant d'une tubulure rigide est recourbée vers le bas, l'autre des tubulures rigides étant courbée vers le haut, ce qui permet au positionnement du dispositif d'interconnexion sensiblement au niveau d'un plan médian de l'échangeur thermique, facilitant ainsi le montage.

L'invention concerne aussi un véhicule comportant un cadre support, un échangeur thermique et un dispositif d'interconnexion, le véhicule ayant l'agencement susmentionné.

Les dessins annexés représentent, à titre d'exemple, un agencement d'un compartiment moteur d'un véhicule automobile ainsi que des modes de réalisation des dispositifs d'interconnexion.
[Fig. 1] La figure 1 est un agrandissement d'une partie avant d'un compartiment moteur représentant, par une vue en perspective, un mode de réalisation de l'agencement d'un compartiment moteur de véhicule automobile, selon l'invention.
[Fig. 2] La figure 2 représente de manière isolée le dispositif d'interconnexion de la figure 1 permettant de relier un échangeur thermique à un circuit de refroidissement.
[Fig. 3] La figure 3 est un agrandissement d'une partie avant d'un compartiment moteur représentant, par une vue en perspective, un autre mode de réalisation de l'agencement d'un compartiment moteur de véhicule automobile, selon l'invention.
[Fig. 4] La figure 4 représente de manière isolée le dispositif d'interconnexion de la figure 3 permettant de relier un échangeur thermique à un circuit de refroidissement.
[Fig. 5] La figure 5 est une vue en perspective de côté permettant de mettre en avant le dispositif d'interconnexion de la figure 4 fixé sur un échangeur thermique.
[Fig. 6] La figure 6 est un agrandissement d'une zone A de la figure 5 mettant en exergue un moyen de blocage à rotation permettant d'améliorer la fixation du dispositif d'interconnexion.

Dans ce qui suit, l'axe x est l'axe longitudinal du véhicule, selon lequel le véhicule est apte à se déplacer habituellement en ligne droite. L'axe x est orienté de l'avant vers l'arrière du véhicule. L'axe y est l'axe transversal du véhicule, sensiblement perpendiculaire à l'axe longitudinal. L'axe y est orienté du côté droit vers le côté gauche du véhicule. L'axe z est un axe sensiblement vertical, sensiblement perpendiculaire aux axes longitudinal x et transversal y. L'axe z est orienté du bas vers le haut, de la partie inférieure vers la partie supérieure du véhicule.

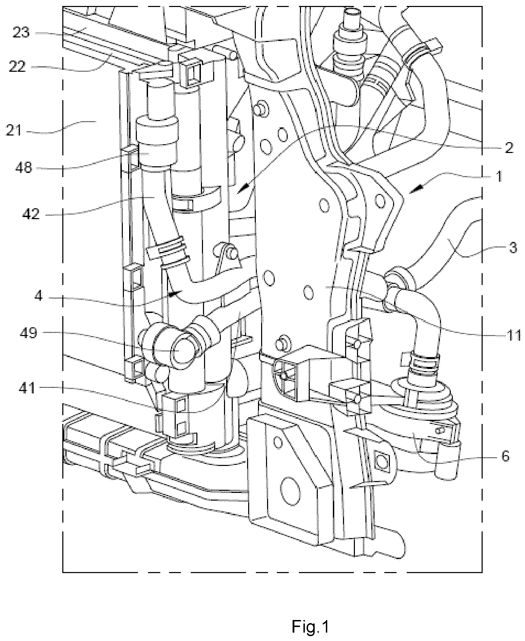

Un exemple d'un mode de réalisation de l'agencement de l'invention, notamment pour un véhicule automobile, est décrit ci-après en référence aux figures, notamment à la figure 1 qui représente selon une vue de trois-quarts avant une face avant technique. Cette dernière comprend un cadre 1 support dont une portion 11 s'étend de manière sensiblement verticale et est apte à venir en prise avec des éléments avant de la caisse du véhicule par l'intermédiaire de platine de fixation dédiées à cet assemblage. La portion 11 du cadre support de la figure 1 est reliée par ses extrémités à des traverses haute et basse parallèles entre elles et sur lesquelles les échangeurs de chaleur sont fixés.

La portion 11 du cadre 1 support est positionnée sensiblement au droit d'un échangeur thermique, notamment un échangeur thermique de type radiateur 23 à haute température d'un circuit de refroidissement d'un moteur à combustion.

Le radiateur 23 peut appartenir à une valise de refroidissement comportant d'autres échangeurs thermiques, notamment un radiateur 21 basse température et un condensateur 22 disposés parallèlement les uns aux autres.

Le radiateur 23 comporte un faisceau dont chacune des extrémités latérales débouchent à l'intérieur d'une boîte à eau qui s'étend verticalement et au regard de la portion 11 du cadre 1 support.

Le compartiment moteur comprend un circuit 3 de refroidissement qui peut être le circuit de refroidissement susmentionné du moteur, mais il peut aussi être un circuit de refroidissement à basse température dont le fluide est un liquide caloporteur destiné au refroidissement d'un air de suralimentation et un équipement électrique dans le cas d'un groupe moto propulseur qui soit de type hybride par exemple.

Le cadre 1 support est ici au moins en partie disposé autour du radiateur 23.

Le radiateur à basse température est, selon un axe longitudinal au véhicule, disposé en avant du cadre 1 support en ce sens qu'il est positionné en porte-à-faux vers l'avant par rapport au cadre support, ce qui engendre un besoin de positionnement d'un dispositif d'interconnexion 4 au travers d'un passage délimité par le cadre 1 support et un échangeur thermique. Un tel dispositif est destiné à se substituer aux conduits souples qui sont de section supérieure et s'étendent entre la portion 11 du cadre 1 support et la boite à eau du radiateur 23. Les besoins en refroidissement tendent à augmenter ce qui tend à rapprocher latéralement le radiateur 23 du cadre 1 support, réduisant d'autant la dimension du passage. Une telle réduction ne permet pas de positionner de telles tubulures souples à l'intérieur de ce passage car si tel n'en était pas le cas, la distance entre la tubulure souple et l'échangeur thermique ou le cadre support serait réduite de telle sorte que les vibrations issues du fonctionnement du véhicule pourraient engendrer de manière néfaste des fuites de la tubulure souple par leur mise en contact répété contre le cadre support ou le radiateur qui lui fait face.

Le dispositif d'interconnexion 4 est ainsi apte à relier un circuit de refroidissement au radiateur à basse température et comprend à cet effet au moins une tubulure rigide 41 dont l'avantage est de permettre d'avoir, pour une même pression hydraulique, une section plus faible qu'avec une tubulure souple. Une telle réduction de la section de la tubulure permet de placer celle-ci dans un passage étroit entre le radiateur et le cadre support. En outre, les avantages de conception du dispositif d'interconnexion, au regard des normes internes de conception établies par les constructeurs, permet du fait du recours à une tubulure rigide 41, un positionnement direct du dispositif d'interconnexion sur le radiateur 23. Un autre avantage apporté par le dispositif d'interconnexion réside dans la possibilité offerte d'augmenter le faisceau de l'échangeur thermique, notamment en augmentant sa largeur de sorte à pouvoir rapprocher l'échangeur thermique du cadre support par ses bords latéraux qui sont notamment délimités par des boîtes collectrices dans le cas d'un positionnement à l'horizontal de l'échangeur thermique. On entend ici par positionnement à l'horizontal, un échangeur thermique dont les tubes formant le faisceau d'échange thermique sont positionnés sensiblement à l'horizontal.

Le dispositif d'interconnexion 4 est réalisé en plastique par un procédé de moulage.

Selon une variante de réalisation, le dispositif d'interconnexion est réalisé en aluminium.

La figure 1 représente un ensemble d'échangeurs thermiques 21, 22, 23 disposés parallèlement les uns aux autres. Préférentiellement, les échangeurs thermiques 21, 22, 23 sont montés les uns avec les autres afin de former un module de refroidissement assimilable à une valise de refroidissement. L'échangeur thermique avant 21 est un radiateur basse température qui est conçu afin de maintenir la température du fluide qui le traverse à une température comprise approximativement entre 20° et 40°. L'échangeur thermique avant 21 est dit à basse température comparativement à l'échangeur thermique arrière 23 qui est traversé par un fluide caloporteur à température plus élevée. Pour cette raison, l'échangeur thermique arrière 23 est un radiateur à haute température qui est relié à un circuit hydraulique à l'intérieur duquel le fluide caloporteur a une température comprise approximativement entre 80° et 100°. La valise de refroidissement comprend un échangeur thermique intermédiaire 22 qui est du type d'un condensateur relié à un circuit de refroidissement et traversé par un fluide réfrigérant. Un tel empilement des échangeurs thermiques permet de créer une valise de refroidissement qui est de conception compacte et unitaire afin d'en favoriser le montage à l'intérieur du cadre 1 support.

Pour relier le radiateur basse température 21 disposé en avant de la valise de refroidissement au circuit de refroidissement 3 disposé pour sa part à l'arrière de la valise de refroidissement, les moyens de liaison doivent être disposées à l'intérieur du passage délimité par la valise de refroidissement et le cadre 1 support.

Le moyen de liaison comprend le dispositif d'interconnexion 4 qui assure une liaison entre le circuit de refroidissement 3 d'un côté et le radiateur 21 à basse température.

Sur les figures, le dispositif d'interconnexion 4 comprend deux tubulures rigides 41 étant donné que les brides d'entrée et de sortie du radiateur à basse température sont disposées du même côté c'est-à-dire au niveau d'une même boîte à eau du radiateur. Selon une variante de réalisation non représentée, le dispositif d'interconnexion 4 peut être disposé au niveau d'un passage entre le cadre 1 support et la valise de refroidissement, un autre dispositif d'interconnexion 4 pouvant par exemple être disposé à l'intérieur d'un autre passage disposé au niveau du côté opposé de la valise de refroidissement.

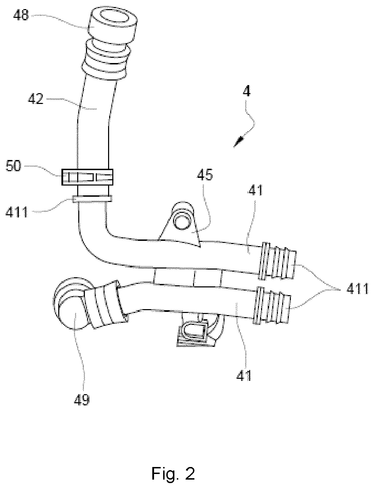

Sur les figures 1 et 2, le dispositif d'interconnexion 4 est fixé sur une boîte à eau d'un échangeur thermique, ici le radiateur à haute température 23. Pour ce faire, le dispositif d'interconnexion 4 comprend une platine d'interfaçage 45 qui est montée solidaire de la tubulure rigide 41 et relie l'autre tubulure rigide 41 de telles sorte que les tubulures rigides 41 d'un même dispositif d'interconnexion sont notamment reliées l'une à l'autre par une unique platine d'interconnexion. La platine d'interfaçage 45 est rendue solidaire d'un des échangeurs thermiques de la valise de refroidissement, ici préférentiellement le radiateur à haute température 23. Ce dernier comprend une interface dédiée, par exemple un plot réalisé par moulage d'une des boîtes collectrices du radiateur 23.

Sur les figures 1 et 2, la platine d'interfaçage 45 comprend une portion sommitale qui fait saillie verticalement hors de la tubulure rigide 41. La portion sommitale présente un profil approximativement triangulaire, au sommet de laquelle un trou est réalisé pour le passage d'une vis de fixation rendant apte l'assemblage par vissage du dispositif d'interconnexion sur la valise de refroidissement.

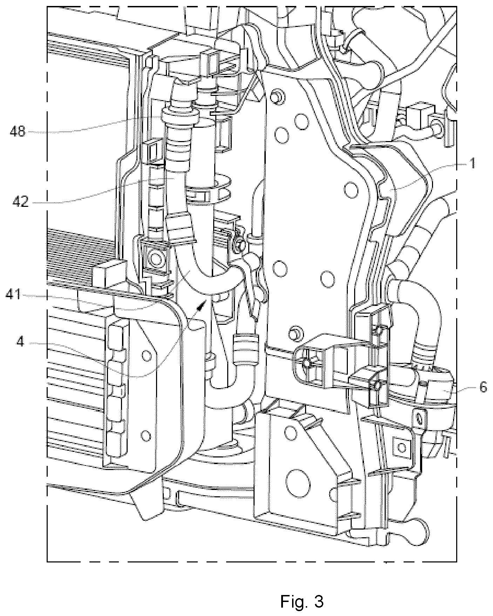

Une variante de réalisation du moyen de fixation du dispositif d'interconnexion 4 est représentée sur les figures 3 à 6. La platine d'interfaçage 45 comprend un moyen de blocage à rotation 46 qui se compose d'au moins une butée 47 en saillie hors d'une partie sommitale de la platine d'interfaçage 45. La butée 47 s'étend préférentiellement à angle droit de la partie sommitale de la platine. Elle est positionnée dans un logement 231 réalisé dans la boîte collectrice du radiateur 23.

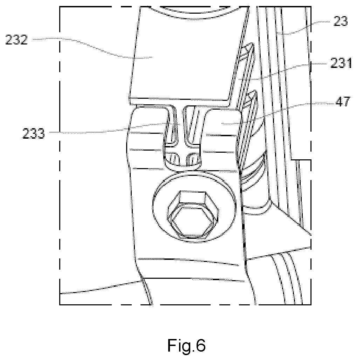

Le logement 231 recevant la butée 47 est réalisé par des nervures entrecroisées 232, 233 réalisées sur la boîte collectrice du radiateur 23, comme cela est rendu visible sur la figure 6. Les nervures définissent un moyen de rigidification de la boîte collectrice qui se compose donc de parois horizontales 232 parallèles entre elles et reliées entre elles par une nervure verticale 233, de sorte que la boîte collectrice comprend deux colonnes de logements 231 répartis verticalement l'une à côté de l'autre sur tout ou partie de la boîte collectrice. Les nervures entrecroisées 232, 233 sont des éléments de rigidification de la boîte à eau de l'échangeur thermique 23.

La platine d'interfaçage 45 peut être réalisée en acier de telle sorte que la butée 47 est obtenue par pliage.

Préférentiellement, le moyen de blocage à rotation comprend deux butées 47 adjacentes espacées l'une de l'autre, comme cela est représenté sur les figures 3 à 6. Dans ce cas, les butées 47 s'étendent dans un plan XY et sont disposées dans des logements 231 qui sont directement adjacents. La nervure verticale 233 est rapportée dans l'espace séparant les butées 47. Les butées 47 sont disposées à proximité immédiate des nervures horizontales et verticale ce qui se traduit par un blocage à rotation de la platine d'interfaçage 45 sur le radiateur 23, donc du dispositif d'interconnexion 4 sur la valise de refroidissement.

Afin de réaliser la connexion nécessaire à l'écoulement du fluide au travers du radiateur 21 à basse température et du circuit de refroidissement 3, le dispositif d'interconnexion 4 comprend au moins une bride d'assemblage 411 disposée à l'une des extrémités de la tubulure rigide.

Selon une variante de réalisation, chacune des extrémités de la tubulure rigide 41 comprend une bride d'assemblage 411. La bride d'assemblage 411 est conçue pour relier le dispositif d'interconnexion 4 soit à une tubulure souple 31, 32 du circuit de refroidissement 3, soit directement au niveau d'un module de liaison 49 fixé directement sur le radiateur 21 au niveau d'une ouverture d'entrée ou de sortie de fluide de l'échangeur de chaleur, notamment le radiateur 21 à basse température.

Selon la nature du matériau utilisé à la fabrication du dispositif d'interconnexion, la bride d'assemblage 411 peut être directement réalisée avec la tubulure rigide 41. La bride d'assemblage peut aussi être réalisée par surmoulage de la tubulure rigide 41. Quel que soit le mode de réalisation, la bride d'assemblage 411 présente un profil sensiblement tronconique et comprend au moins une rainure de retenue, notamment deux rainures de retenue coaxiales et parallèles. Une telle conception permet un montage par emmanchement de la tubulure souple 31, 32, 42 du circuit de refroidissement 3 ou du module de liaison 48, ou directement d'un module de liaison 49 autour de la bride d'assemblage 411.

Le module de liaison 48, 49 est adapté à l'ouverture d'entrée ou de sortie de fluide de l'échangeur de chaleur de telle sorte qu'il est apte à assurer une fixation rapide, notamment par encliquetage.

Un collier de serrage 50 peut être utiliser afin d'assurer un meilleur niveau de fixation de chacune des tubulures souples 31, 32, 42 ou du module de liaison 49 à la brise d'assemblage 411.

Les tubulures souples 31, 32, 42 sont de section supérieure à celle de la tubulure rigide 41 du dispositif d'interconnexion 4 ce qui en interdit le positionnement directement dans le passage étroit qui sépare le cadre 1 support de la valise de refroidissement.

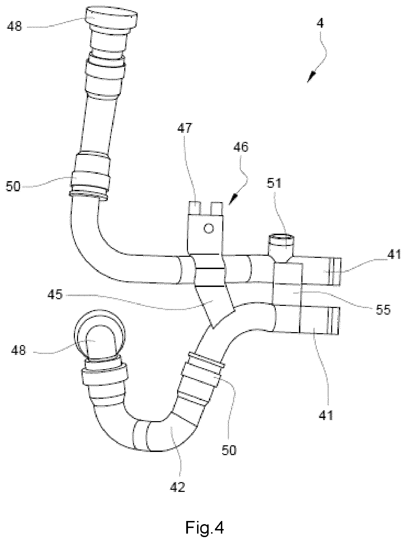

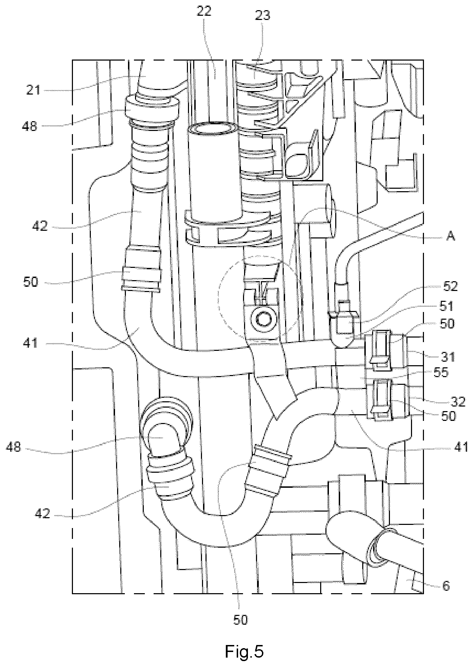

Sur les figures 4 et 5, le dispositif d'interconnexion comprend une douille 51 formant une ouverture au travers de la tubulure rigide 41 afin de permettre le positionnement d'un capteur de température 52. La douille 51 peut être assemblée par soudure à la tubulure rigide 41 en acier, ou être réalisée par moulage du dispositif d'interconnexion en matière plastique.

Sur la variante de réalisation des figures 4 et 5, les deux tubulures rigides 41 sont reliées mécaniquement l'une à l'autre par la platine d'interfaçage 45 et par une plaque de liaison 55 disposée à proximité immédiate de la bride d'assemblage 411.

Le dispositif d'interconnexion 4 est adapté à la typologie de la valise de refroidissement de telle sorte qu'il est conçu de manière à s'adapter aux différentes conceptions d'échangeurs thermiques. A titre d'exemples, comme cela est représenté sur les figures 1 et 5, le dispositif d'interconnexion est adapté au radiateur à haute température 23 par son dispositif d'interfaçage 45 particulier. La forme des tubulures rigides 41 du dispositif d'interconnexion est ainsi adaptée aux moyens de liaison fluidique le reliant aux ouvertures d'entrée ou sortie de fluide du radiateur 21 à basse température. C'est la raison pour laquelle, une extrémité avant d'une tubulure rigide 41 est recourbée de manière approximativement perpendiculaire à l'extrémité arrière de cette même tubulure rigide. Sur la figure 5, la tubulure 41 supérieure comprend une extrémité avant qui est courbée verticalement vers le haut de telle sorte qu'elle permet une liaison fluidique avec l'une des ouvertures d'entrée ou de sortie supérieur du radiateur 21 par une tubulure souple 42 droite positionnée verticalement. Sur cette même figure 5, le dispositif d'interconnexion 4 comprend une tubulure 41 inférieure dont l'extrémité avant est courbée verticalement vers le bas, ce qui permet une liaison fluidique avec l'autre des ouvertures d'entrée ou de sortie inférieure du radiateur 21 par une tubulure souple 42 un profil en U. La variante de réalisation des figures 1 et 2 montre une extrémité avant de la tubulure rigide 41 inférieure qui est approximativement horizontale de telle sorte qu'elle débouche sensiblement au droit de l'une des ouvertures d'entrée ou de sortie supérieure du radiateur 21 pour une connexion fluidique réalisée directement par un module de liaison 49, ce dernier étant directement fixé à la bride d'assemblage 411.

Le dispositif d'interconnexion 4 permet de créer un chemin de fluide reliant un échangeur thermique 21 disposé à l'avant du cadre à des organes 6 du circuit 3 de refroidissement disposé à l'arrière de ce même cadre. L'organe 6 des figures 1, 3 et 5 peut être une pompe de circulation du fluide de refroidissement dans le circuit 3, sachant qu'il pourrait aussi s'agir d'un organe à refroidir tel que par exemple un refroidisseur d'air de suralimentation non représenté.

Le recours à un tel agencement d'un compartiment moteur d'un véhicule automobile permet de manière avantageuse d'augmenter la puissance de refroidissement en utilisant des faisceaux des échangeurs thermiques de plus grandes dimensions de telle sorte que le passage délimité par leurs bords latéraux et le cadre 1 support est réduit. Avec l'agencement selon l'invention, il devient également possible de communaliser la valise de refroidissement sur des véhicules de catégories différentes. Un même type de valise de refroidissement développé pour des véhicules de gamme supérieure, peut aussi être déployé sur des véhicules de gamme inférieure pour lesquels le besoin en refroidissement s'accroît au regard des nouvelles technologies de propulsion embarquées, telle que par exemple une hybridation électrique / thermique d'une chaîne de propulsion du véhicule.

Le dispositif d'interconnexion 4 est rapporté par vissage sur une valise de refroidissement de telle sorte qu'il peut aussi être assemblé à cette dernière avant d'être livré pour un montage de la valise de refroidissement dans un compartiment moteur d'un véhicule automobile. Les liaisons fluidiques du dispositif d'interconnexion 4 à l'échangeur de la valise de refroidissement peuvent également être réalisées préalablement à une livraison de l'ensemble formé de la valise de refroidissement et du dispositif d'interconnexion 4.

## Revendications

1. Agencement d'un compartiment moteur d'un véhicule automobile comportant un cadre (1) support, au moins un échangeur thermique (21, 22, 23) et un circuit (3) de refroidissement, l'agencement comporte en outre un dispositif d'interconnexion (4) reliant au moins un échangeur thermique au circuit de refroidissement est disposé pour partie au travers d'un passage délimité par l'échangeur thermique et le cadre support, **caractérisé en ce que** le cadre (1) support étant au moins en partie disposé autour de l'échangeur thermique et le dispositif d'interconnexion (4) étant fixé sur une boîte à eau d'un échangeur thermique, notamment par vissage d'une platine d'interfaçage (45) qui est montée solidaire d'une tubulure rigide (41).

2. Agencement selon la revendication 1, dans lequel le dispositif d'interconnexion (4) comprend au moins une tubulure rigide (41) dont une portion est placée entre un bord latéral de l'échangeur thermique et une portion (11) du cadre support.

3. Agencement selon la revendication 1 ou 2, dans lequel le dispositif d'interconnexion (4) comprend un moyen de blocage à rotation (46) qui se compose d'au moins une butée (47) en saillie hors d'une partie sommitale de la platine d'interfaçage (45), la butée étant positionnée dans un logement (231) de l'échangeur thermique.

4. Agencement selon la revendication précédente, dans lequel le logement (231) est délimité par des nervures entrecroisées (232, 233) de rigidification réalisées sur une boîte à eau de l'échangeur thermique (23).

5. Agencement selon l'une quelconque des revendications précédentes, dans lequel la tubulure rigide (41) comprend au moins une bride d'assemblage (411) disposée à l'une des extrémités de la tubulure rigide pour sa connexion à l'échangeur thermique (21) ou au circuit (3) de refroidissement.

6. Agencement selon l'une quelconque des revendications précédentes, dans lequel le dispositif d'interconnexion (4) comporte deux tubulures rigides (41) parallèles au moins en partie l'une par rapport à l'autre, et reliées entre elles par la platine d'interfaçage (45).

7. Agencement selon l'une quelconque des revendications précédentes, dans lequel le dispositif d'interconnexion (4) comprend une douille (51) destinée au montage d'un équipement, notamment un capteur (52) de température.

8. Agencement selon l'une quelconque des revendications précédentes, dans lequel une extrémité avant de la tubulure rigide (41) est recourbée de manière approximativement perpendiculaire à l'extrémité arrière de la même tubulure rigide (41).

9. Véhicule comportant un cadre (1) support, un échangeur thermique (21, 22, 23) et un dispositif d'interconnexion (4), **caractérisé en ce qu'**il comprend un agencement conforme à l'une quelconque des revendications précédentes.

## Patentansprüche

1. Anordnung eines Motorraums eines Kraftfahrzeugs, die einen Stützrahmen (1), mindestens einen Wärmetauscher (21, 22, 23) und einen Kühlkreislauf (3) aufweist, wobei die Anordnung außerdem eine Verbindungsvorrichtung (4) aufweist, die mindestens einen Wärmetauscher mit dem Kühlkreislauf verbindet und zum Teil durch einen Durchgang hindurch angeordnet ist, der vom Wärmetauscher und vom Stützrahmen begrenzt wird, **dadurch gekennzeichnet, dass** der Stützrahmen (1) zumindest zum Teil um den Wärmetauscher herum angeordnet und die Verbindungsvorrichtung (4) an einem Wasserkasten eines Wärmetauschers befestigt ist, insbesondere durch Festschrauben einer Kopplungsplatte (45), die mit einem steifen Anschlussstutzen (41) fest verbunden montiert ist.

2. Anordnung nach Anspruch 1, wobei die Verbindungsvorrichtung (4) mindestens einen steifen Anschlussstutzen (41) enthält, von dem ein Teil zwischen einem Seitenrand des Wärmetauschers und einem Teil (11) des Stützrahmens platziert ist.

3. Anordnung nach Anspruch 1 oder 2, wobei die Verbindungsvorrichtung (4) eine Drehsperreinrichtung (46) enthält, die aus mindestens einem Anschlag (47) besteht, der aus einem Scheitelbereich der Kopplungsplatte (45) vorsteht, wobei der Anschlag in einer Aufnahme (231) des Wärmetauschers positioniert ist.

4. Anordnung gemäß dem vorhergehenden Anspruch, wobei die Aufnahme (231) von kreuzförmig angeordneten Versteifungsrippen (232, 233) begrenzt wird, die auf einem Wasserkasten des Wärmetauschers (23) hergestellt sind.

5. Anordnung nach einem der vorhergehenden Ansprüche, wobei der steife Anschlussstutzen (41) mindestens einen Montageflansch (411) enthält, der an einem der Enden des steifen Anschlussstutzens für seine Verbindung mit dem Wärmetauscher (21) oder mit dem Kühlkreislauf (3) angeordnet ist.

6. Anordnung nach einem der vorhergehenden Ansprüche, wobei die Verbindungsvorrichtung (4) zwei zumindest zum Teil zueinander parallele und durch die Kopplungsplatte (45) miteinander verbundene steife Anschlussstutzen (41) aufweist.

7. Anordnung nach einem der vorhergehenden Ansprüche, wobei die Verbindungsvorrichtung (4) eine Buchse (51) enthält, die zur Montage einer Ausrüstung, insbesondere eines Temperaturfühlers (52), bestimmt ist.

8. Anordnung nach einem der vorhergehenden Ansprüche, wobei ein vorderes Ende des steifen Anschlussstutzens (41) in etwa lotrecht zum hinteren Ende des gleichen steifen Anschlussstutzens (41) gekrümmt ist.

9. Fahrzeug, das einen Stützrahmen (1), einen Wärmetauscher (21, 22, 23) und eine Verbindungsvorrichtung (4) aufweist, **dadurch gekennzeichnet, dass** es eine Anordnung gemäß einem der vorhergehenden Ansprüche enthält.

## Claims

1. Arrangement of an engine compartment of a motor vehicle having a support frame (1), at least one heat exchanger (21, 22, 23) and a cooling circuit (3), the arrangement also having an interconnection device (4) connecting at least one heat exchanger to the cooling circuit that is disposed partially through a passage delimited by the heat exchanger and the support frame, **characterized in that** the support frame (1) is at least partially disposed around the heat exchanger and the interconnection device (4) is fastened to a water box of a heat exchanger, in particular by screwing an interfacing plate (45) that is mounted secured to the rigid pipe (41).

2. Arrangement according to Claim 1, wherein the interconnection device (4) comprises at least one rigid pipe (41) of which a portion is placed between a lateral edge of the heat exchanger and a portion (11) of the support frame.

3. Arrangement according to Claim 1 or 2, wherein the interconnection device (4) comprises a rotation prevention means (46) that is made up of at least one stop (47) protruding out of a top part of the interfacing plate (45), the stop being positioned in a recess (231) of the heat exchanger.

4. Arrangement according to the preceding claim, wherein the recess (231) is delimited by crisscrossed stiffening ribs (232, 233) realized on a water box of the heat exchanger (23).

5. Arrangement according to any one of the preceding claims, wherein the rigid pipe (41) comprises at least one joining flange (411) disposed at one of the ends of the rigid pipe for connection thereof to the heat exchanger (21) or to the cooling circuit (3).

6. Arrangement according to any one of the preceding claims, wherein the interconnection device (4) has two rigid pipes (41) that are at least partially parallel to one another and are connected to each other by the interfacing plate (45).

7. Arrangement according to any one of the preceding claims, wherein the interconnection device (4) comprises a socket (51) intended for the mounting of an item of equipment, in particular a temperature sensor (52).

8. Arrangement according to any one of the preceding claims, wherein a front end of the rigid pipe (41) is curved so as to be approximately perpendicular to the rear end of the same rigid pipe (41).

9. Vehicle having a support frame (1), a heat exchanger (21, 22, 23) and an interconnection device (4), **characterized in that** it comprises an arrangement in accordance with any one of the preceding claims.
